# EUROPÄISCHE PATENTSCHRIFT

(11) **EP 3 585 841 B1**
(45) Veröffentlichungstag und Bekanntmachung des Hinweises auf die Patenterteilung: **27.05.2020**
(21) Anmeldenummer: 17707822.7
(22) Anmeldetag: 27.02.2017
(51) Int. Cl.: C09C 1/30, C01B 33/18, C04B 24/42, C04B 26/32, C04B 30/00, C01B 33/00, C04B 18/02, C04B 20/10

(54) **VERFAHREN ZUR HERSTELLUNG HYDROPHOBER SILICA GRANULATE**
METHOD FOR PRODUCING HYDROPHOBIC SILICA GRANULES
PROCÉDÉ DE FABRICATION DE GRANULÉS EN SILICE HYDROPHOBE

(43) Veröffentlichungstag der Anmeldung: 01.01.2020
(73) Patentinhaber: Wacker Chemie AG, 81737 München (DE)
(72) Erfinder: HINDELANG, Konrad, 80939 München (DE); WEIDNER, Richard, 84489 Burghausen (DE); JANTKE, Dominik, 84489 Burghausen (DE)
(74) Vertreter: Fritz, Helmut
(86) Internationale Anmeldenummer: PCT/EP2017/054467
(87) Internationale Veröffentlichungsnummer: WO 2018/153493

(56) Entgegenhaltungen:
- EP-A1- 1 813 574
- EP-A1- 2 781 558
- DE-A1-102007 020 716
- DE-A1-102007 059 862
- DE-A1-102009 054 566
- DE-B1- 1 807 714

## Beschreibung

Die Erfindung betrifft ein Verfahren zur Herstellung hydrophober Silica Granulate bei niedriger Temperatur.

Die Wärmedämmung zur Einsparung von Energie hat im Rahmen des Bewusstwerdens für nachhaltige Entwicklung und der Verteuerung der Energie sowie sich verknappenden fossilen Rohstoffen einen hohen Stellenwert erhalten. Diese Anforderungen an eine Optimierung des Wärmedämmschutzes gelten im gleichen Maße sowohl für Gebäude, also für Neubauten oder Bauten im Bestand, als auch für thermische Isolierungen im logistischen oder stationären Bereich.

Vor dem Hintergrund einer nachhaltigen Isolierung, welche eine geringe Wärmeleitung sowie geringe Brennbarkeit aufweist, sind anorganische, poröse Materialien zunehmend im Fokus.

Organische Dämmstoffe (z.B. Polystyrol) kommen aufgrund ihrer Brennbarkeit und einer zum Teil nicht geklärten Entsorgung zunehmen unter Druck. Es ist daher wünschenswert Dämmstoffe mit möglichst geringer Brennbarkeit herzustellen.

Poröse, anorganische Stoffe wie pyrogene oder gefällte Kieselsäuren zeigen gute Isoliereigenschaften und sind zudem nicht brennbar.

Pyrogene Kieselsäuren werden durch Flammenhydrolyse von flüchtigen Siliciumverbindungen, wie z.B. organischen und anorganischen Chlorsilanen, in einer Wasserstoff- und Sauerstoffflamme hergestellt. Die so hergestellten Kieselsäuren weisen eine poröse Struktur auf und sind hydrophil.

Gefällte Kieselsäuren werden durch einen Fällungsprozess aus Wasserglas hergestellt. Als Wasserglas werden aus einer Schmelze erstarrte, glasartige, also amorphe, wasserlösliche Natrium-, Kalium- und Lithiumsilicate oder ihre wässrigen Lösungen bezeichnet. Durch Neutralisieren des Salzes, Hydrolyse und Kondensation entstehen aus den kettenartigen Si-O-Si-Verbindungen partikuläre [SiO_{4/2}] -Verbindungen.

Solch partikuläre Systeme besitzen ohne Verdichtung in der losen Schüttung bereits gute thermische Isoliereigenschaften. Im Bausektor führt die feinteilige Struktur der gefällten oder pyrogen hergestellten Kieselsäuren zu Schwierigkeiten bei der Verarbeitung wie etwa starke Staubbildung. Ebenso ist die Rieselfähigkeit sehr feinteiliger Substanzen beschränkt.

DE 10 2010 003 204 A1 zeigt, dass Kieselsäuren durch eine Kompaktierung, also Granulierung, in eine für viele Anwendungen verbesserte Form überführt werden können. Die erhaltenen Trägermaterialien zeigen gute Rieselfähigkeit, sind allerdings hydrophil.

Für den Einsatz als Wärmedämmstoff, insbesondere in der Bauisolierung, sind solch hydrophile Granulate allerdings kaum anwendbar, da hydrophile Kieselsäuren eine unerwünscht hohe Feuchtigkeitsaufnahme zeigen, wodurch unter anderem die Wärmedämmeigenschaften nachlassen.

Es ist daher für Anwendungen in der Bauisolierung wünschenswert hydrophobe Dämmstoffe einzusetzen, um die Wasseraufnahme und dadurch den Verlust der thermischen Isolierungswirkung zu reduzieren.
Eine durchgängig hydrophobe Wärmedämmung erhält man beispielsweise, indem das Hydrophobierungsmittel vor dem

Verpressen auf die Kieselsäure aufgebracht wird. So beschriebt DE 10 2009 054 566 A1, die Herstellung einer durchgängig hydrophoben Wärmedämmung, indem Mischungen aus Kieselsäure, Fasern und schwerflüchtigen Organosilanen bzw. Organosiloxanen verpresst werden. Flüchtige Anteile werden anschließend durch Ausheizen entfernt ([0025] + Beispiele). Der Temperungsschritt verursacht allerdings zusätzliche Kosten.
DE 10 2007 020 716 A1 beschreibt hydrophobe Hohlbausteinfüllungen, hergestellt aus Kieselsäuren die mit flüchtigen Organosilanen belegt sind und anschließend verpresst werden. Problematisch ist hierbei die Freisetzung von Abspaltprodukten, insbesondere flüchtiger organischer Abbauprodukte.
Über beide Verfahren (DE 10 2009 054 566 A1 und DE 10 2007 020 716 A1) erhält man durchgängig hydrophobe Platten mit sehr guten Isoliereigenschaften. Allerdings sind für viele Anwendungen rieselfähige Granulate bevorzugt, was über die offenbarten Verfahren nicht bereitgestellt wird.
DE 10 2012 211 121 A1 offenbart ein Verfahren zur Herstellung hydrophober Granulate basierend auf Kieselsäure, indem zunächst hydrophile Granulate hergestellt werden. Diese werden nachträglich, durch Aufsprühen eines Organosilans und anschließender Temperung bei 130 °C, oberflächenmodifiziert.

Die erhaltenen Granulate zeigen eine hohe Adsorptionskraft für Enzyme auf DE 10 2007 059862 A1 und EP 1 813 574 A1 offenbaren Verfahren zur Herstellung einer oberflächenmodifizierten, hydrophoben Kieselsäure.

Durch das nachträgliche besprühen werden zwar die oberflächennahen Bereiche hydrophobiert, das gesamte Porensystem im Inneren der Partikel wird aber nicht ausreichend hydrophobiert, was nachteilig für die Verwendung als Dämmstoff für Bauanwendungen ist.

Vollständige hydrophobe Granulate würde man durch die Kompaktierung hydrophober Kieselsäuren erhalten. Dem Fachmann ist allerdings bekannt(DE 10 2007 020 716 A1: Absatz [0024]), dass sich hydrophobe Kieselsäuren aufgrund des geringeren Anteils an Si-OH Gruppen nicht mehr zu stabilen Formkörpern kompaktieren lassen. Dies konnte auch durch entsprechende Vergleichsbeispiele bestätigt werden (Vergleichsbeispiel 3 und 7) .

Der Erfindung liegt die Aufgabe zugrunde ein wirtschaftliches, kontinuierlich durchführbares Verfahren zur Herstellung hydrophober Granulate bereitzustellen.

Gegenstand der Erfindung ist ein Verfahren zur Herstellung hydrophober Silica Granulate, bei dem
i) eine Mischung enthaltend hydrophile Kieselsäure bei einer Temperatur von höchstens 55°C mit Hydrophobierungsmittel belegt wird,
ii) die Mischung aus Schritt i nach einer Lagerungsdauer von höchstens 24 Stunden entlüftet wird und
iii) die Mischung aus Schritt ii auf eine Zielschüttdichte verdichtet wird,
iv) wobei während der Verdichtung in Schritt iii eine Granulierung stattfindet.

Das Verfahren liefert auf einfache Weise mechanisch stabile Granulate. Das Hydrophobierungsmittel reagiert erst während oder nach dem Verdichtungsschritt iii vollständig ab.

Überraschenderweise wurde gefunden, dass sich frisch mit einem geeigneten Hydrophobierungsmittel belegte Kieselsäure hinsichtlich ihrer Eignung zur Granulierung wie hydrophile Kieselsäure verhält. Dieser spezielle Effekt geht verloren, wenn die belegte Kieselsäure temperiert wird.
In EP 2 781 558 A1 wird beschrieben, dass eine bei niedrigen Temperaturen mit einem kurzkettigen OH-terminierten Polydimethylsiloxan belegte Kieselsäure im Vergleich zu einer getemperten Kieselsäure eine deutlich geringere Hydrophobie aufweist (bestimmt über Methanolbenetzbarkeit). Es ist zudem beschrieben, dass die Hydrophobie während der Lagerung langsam zunimmt. Als Vorteil dieser Kieselsäure, im Vergleich zum Stand der Technik, sind kürzere Einarbeitungszeiten in Kautschuke genannt. Eine positive Auswirkung auf die Verdichtungseigenschaften, beispielsweise zur Herstellung von Wärmestoffen, ist nicht offenbart.
Mit dem in der vorliegenden Erfindung offenbarten Verfahren, ist es überraschenderweise gelungen das Hydrophobierungsmittel vor dem Verdichtungsschritt einzumischen. Das Hydrophobierungsmittel ist daher auch im Kern des Granulats enthalten. Die Verarbeitungseigenschaften während der Granulierung werden dabei nicht negativ beeinflusst. Dadurch kann Standardequipment zur Granulierung eingesetzt und auf aufwendige Prozessschritte, wie die nachträgliche Hydrophobierung und Temperung, verzichtet werden.

Da vorzugsweise Hydrophobierungsmittel eingesetzt werde, welche bei der Reaktion mit den Si-OH Gruppen keine flüchtigen, organischen Verbindungen (VOCs) abspalten, muss nach der Belegung und dem Granulieren auch keine Temperung (auch Abreinigung genannt) zur Entfernung der flüchtigen Bestandteile (z.B. Abspaltprodukte) durchgeführt werden.
Damit die belegte Kieselsäure effizient verdichtet werden kann und stabile Granulate entstehen, wird darauf geachtet, dass die Temperatur im Schritt i der Belegung höchstens 55 °C, bevorzugt höchstens 40 °C, besonders bevorzugt höchstens 25 °C beträgt.

Vorzugsweise beträgt die Temperatur bei allen Verfahrensschritten, in der Zeit zwischen Belegung und Entlüftung, in der Zeit zwischen Entlüftung und Granulierung, während der Granulierung und Zerkleinerung bzw. Siebung höchsten 55 °C, bevorzugt höchstens 40 °C, besonders bevorzugt höchstens 25 °C.

Neben der besseren Verdichtbarkeit und den verbesserten Produkteigenschaften ermöglicht diese Temperaturführung die Rückführung von Feinanteilen in die Schritte i bis iii. Zudem können gegenüber den Verfahren mit Temperungs- bzw. Abreinigungsschritten Energiekosten eingespart werden. Das Verfahren kann insbesondere aufgrund der niedrigen Temperaturen und dem Verzicht auf Druckwechsel in allen Schritten kontinuierlich durchgeführt werden.

### Kieselsäure

In den erfindungsgemäßen Verfahren können alle dem Fachmann bekannten hydrophilen Kieselsäuren eingesetzt werden. Bevorzugt werden pyrogene Kieselsäuren oder Fällungskieselsäuren oder Gemische davon eingesetzt. Dabei werden weiterhin bevorzugt Kieselsäuren mit einer BET Oberfläche gemäß DIN 66131 (mit Stickstoff bestimmt) zwischen 50 und 800 m²/g, besonders bevorzugt zwischen 100 und 500 m²/g und insbesondere bevorzugt Kieselsäuren mit einer Oberfläche zwischen 150 und 400 m²/g eingesetzt. Hydrophil bedeutet im Rahmen dieser Erfindung, dass die Si-OH Gruppen an der Oberfläche zugänglich sind und die Kieselsäuren durch Wasser benetzbar sind. Besonders bevorzugt werden pyrogene Kieselsäuren mit BET-Oberflächen zwischen 150 und 400 m²/g eingesetzt.

### Additive

Als weitere Komponenten können insbesondere im Schritt i Additive zugesetzt werden, die Wärmestrahlen im Infrarotbereich absorbieren, streuen oder reflektieren können. Sie werden im Allgemeinen als IR-Trüber bezeichnet. Vorzugsweise weisen diese Trüber im IR-Spektralbereich ein Maximum zwischen vorzugsweise 1,5 und 10 m auf. Die Partikelgröße der Teilchen liegt vorzugsweise zwischen 0,5 - 15 µm. Beispiele für derartige Substanzen sind vorzugsweise Titanoxide, Zirkonoxide, Ilmenite, Eisentitanate, Eisenoxide, Zirkonsilikate, Siliciumcarbid, Manganoxide und Ruß.
Weiterhin können zu einer Reduzierung der elektrostatischen Aufladung, falls benötigt, alle dem Fachmann bekannten Additive zur Reduzierung der elektrostatischen Aufladung wie etwa leitende Alkylammoniumsalze zugesetzt werden.
Aus technischen und / oder wirtschaftlichen Gründen können weitere Füllstoffe zugesetzt werden. Zum Einsatz kommen hier vorzugsweise synthetisch hergestellte Modifikationen von Siliciumdioxid, wie z. B. Aerogele, gefällte Kieselsäuren, Lichtbogenkieselsäuren, SiO₂-haltige Flugstäube, die durch Oxidation von flüchtigem Siliciummonooxid bei der elektrochemischen Herstellung von Silicium oder Ferrosilicium entstehen. Ebenso Kieselsäuren, die durch Auslaugen von Silikaten wie Calciumsilikat, Magnesiumsilikat und Mischsilikaten wie beispielsweise Olivin mit Säuren hergestellt werden. Ferner kommen zum Einsatz natürliche vorkommende SiO₂-haltige Verbindungen wie Diatomeenerden und Kieselguren.
Um eine gute Verarbeitbarkeit (z.B. Rieselfähigkeit und Granulierbarkeit) der Kieselsäure enthaltenden Mischung sicherstellen zu können, wird in einer bevorzugten Ausführungsform auf die Zugabe von Fasern verzichtet. Vorzugsweise enthält die Mischung enthaltend hydrophile Kieselsäure, welche in Schritt i mit Hydrophobierungsmittel belegt wird, mindestens 80 Gew.-%, besonders bevorzugt mindestens 90 Gew.-%, insbesondere mindestens 95 Gew.-% hydrophile Kieselsäure.

### Hydrophobierungsmittel

Als Hydrophobierungsmittel sind alle dem Fachmann bekannten Stoffe zur Hydrophobierung von Kieselsäuren einsetzbar, insbesondere Organosiliciumverbindungen (z.B. Organosilane, Organosiloxane oder Siliconharze) und Kohlenwasserstoffe (z.B. Parafine, Wachse, Carbonsäuren, insbesondere Fettsäuren). Als Hydrophobierungsmittel werden vorzugsweise bei 25°C flüssige, reaktive Organosilane, Organosiloxane oder Siliconharze eingesetzt, welche hydrophobierende Eigenschaften besitzen und zur Reaktion mit den Si-OH Gruppen der Kieselsäureoberfläche befähigt sind.

Die Hydrophobierungsmittel können rein oder in beliebigen Gemischen eingesetzt werden.

Bevorzugt ist die Reaktivität der eingesetzten Hydrophobierungsmittel so gewählt, dass die hydrophobierende Wirkung vor dem Verdichtungsschritt ii noch nicht komplett entfaltet ist.

Bevorzugt werden Organosilane, Organosiloxane oder Siliconharze eingesetzt, die während der Reaktion mit den Si-OH Gruppen der Kieselsäure bezogen auf die Masse der Mischung höchsten 1 % (höchstens 0,1 %, höchstens 0,01%) an flüchtigen organischen und/oder ätzenden Verbindungen abspalten, wobei unter diesen Verbindungen bevorzugt CH₃OH, CH₃CH₂OH, CH₃COOH, HCl, NH₃ verstanden werden.

Es werden als Hydrophobierungsmittel vorzugsweise Organosilane der allgemeinen Formel

R¹ₙR²ₘSiX₄₋₍ₙ₊ₘ₎ (I)

eingesetzt,
wobei n und m 0, 1, 2, oder 3 sein können und die Summe n + m kleiner oder gleich 3 ist und
R¹ ein gesättigter oder einfach oder mehrfach ungesättigter, einwertiger, gegebenenfalls mit -CN, -NCO, -NR³, -COOH, -COOR³, -Halogen, -Acryl, -Epoxy, -SH, -OH oder -CONR³₂ substituierten Si-C gebundenen C₁-C₂₀-Kohlenwasserstoffrest, bevorzugt ein C₁-C₁₈-Kohlenwasserstoff-Rest, oder ein Arylrest, oder C₁-C₁₅-Kohlenwasserstoffoxyrest, bevorzugt ein C₁-C₈-Kohlenwasserstoffoxy-Rest, besonders bevorzugt ein C₁-C₄-Kohlenwasserstoffoxy-Rest, in denen jeweils eine oder mehrere, einander nicht benachbarte Methyleneinheiten durch Gruppen -O-, -CO-, -COO-, -OCO-, oder -OCOO-, -S-, oder -NR³- ersetzt sein können und in denen eine oder mehrere, einander nicht benachbarte Methineinheiten durch Gruppen, -N=, -N=N-, oder -P= ersetzt sein können, ist, wobei
R² Wasserstoff oder ein gesättigter oder einfach oder mehrfach ungesättigter, einwertiger, gegebenenfalls mit -CN, -NCO, -NR³₂ , -COOH, -COOR³, -Halogen, -Acryl, -Epoxy, -SH, -OH oder -CONR³₂ substituierten Si-C gebundenen C₁-C₂₀-Kohlenwasserstoffrest, bevorzugt ein C₁-C₁₈-Kohlenwasserstoff-Rest, oder ein Arylrest, oder C₁-C₁₅-Kohlenwasserstoffoxyrest, bevorzugt ein C₁-C₈-Kohlenwasserstoffoxy-Rest, besonders bevorzugt ein C₁-C₄-Kohlenwasserstoffoxy-Rest, in denen jeweils eine oder mehrere, einander nicht benachbarte Methyleneinheiten durch Gruppen -O-, -CO-, -COO-, -OCO-, oder -OCOO-, -S-, oder -NR³- ersetzt sein können und in denen eine oder mehrere, einander nicht benachbarte Methineinheiten durch Gruppen, -N=, -N=N-, oder -P= ersetzt sein können, ist, wobei
R³ die gleiche Bedeutung wie R² hat, und R² und R³, gleich oder verschieden sein können,
X ein C-O gebundener C₁-C₁₅-Kohlenwasserstoff-Rest, bevorzugt ein C₁-C₈-Kohlenwasserstoff-Rest, besonders bevorzugt ein C₁-C₃-Kohlenwasserstoff-Rest, oder ein Acetylrest, oder ein Halogenrest, bevorzugt Chlor, oder Wasserstoff, oder ein OH-Rest bedeutet,
oder

R¹¹ᵢR²²ⱼSi-Y-SiR¹¹ᵢR²²ⱼ (II)

wobei
R¹¹ die Bedeutung von R¹ und R²² die Bedeutung von R² haben,
i und j 0, 1, 2 oder 3 sein können und die Summe aus i + j gleich 3 ist und
Y die Gruppe NH oder -O- sein kann.

Es werden vorzugsweise kettenförmige oder cyclische, verzweigte oder unverzweigte Organosiloxane bestehend aus Bausteinen der allgemeinen Formeln

(R⁴ₐZ_{b}SiO_{1/2}) (III-a)

(R⁴₂SiO_{2/2}) (III-b)

(R⁴SiO_{3/2}) (III-c)

(R⁴R⁵SiO_{2/2}) (III-d)

(SiO_{4/2}) (III-e)

eingesetzt,
wobei die Bausteine in beliebigen Mischungen enthalten sein können, wobei
R⁴ die Bedeutung von R¹ und R⁵ die Bedeutung von R² haben, und Z die Bedeutung von X haben und jeweils gleich oder verschieden sein können, und a und b 0, 1, 2, oder 3 sein können, mit der Massgabe, dass die Summe a + b gleich 3 ist.

Bevorzugt werden cyclische Organosiloxane eingesetzt.

Bevorzugt werden auch kettenförmige organofunktionelle Organopolysiloxane eingesetzt, bestehend aus vorzugsweise 2 Bausteinen der allgemeinen Formel III-a und vorzugsweise 1 bis 100000 Bausteinen der allgemeinen Formel III-b und vorzugsweise 1 bis 500 Bausteinen der allgemeinen Formel III-d, bevorzugt 1 bis 50000 Bausteinen der allgemeinen Formel III-b und vorzugsweise 1 bis 250 Bausteinen der allgemeinen Formel III-d, besonders bevorzugt 1 bis 10000 Bausteinen der allgemeinen Formel III-b und vorzugsweise 1 bis 200 Bausteinen der allgemeinen Formel III-d, und ganz besonders bevorzugt 1 bis 5000 Bausteinen der allgemeinen Formel III-b und 1 bis 100 Bausteinen der allgemeinen Formel III-d, wobei R⁴ bevorzugt Methyl und R⁵ bevorzugt -CH₂-CH₂-CH₂-NH₂ oder -CH₂-CH₂-CH₂-NH-CH₂-CH₂-NH₂ ist.

Bevorzugt werden kettenförmige Organopolysiloxane eingesetzt, bestehend vorzugsweise aus 2 Bausteinen der allgemeinen Formel III-a und vorzugsweise 1 bis 100000 Bausteinen der allgemeinen Formel III-b, bevorzugt 1 bis 50000 Bausteinen der allgemeinen Formel III-b, besonders bevorzugt 1 bis 10000 Bausteinen der allgemeinen Formel III-b, und besonders bevorzugt 1 bis 5000 Bausteinen der allgemeinen Formel III-b, R⁴ bevorzugt Methyl.

Besonders bevorzugt werden kettenförmige Organosiloxane eingesetzt, deren R⁴ bevorzugt Methyl und deren Z bevorzugt -OH ist.

Die kinematische Viskosität der Organosiloxane gemessen bei 25 °C beträgt vorzugsweise 1 mm²/s bis 100000 mm²/s, bevorzugt 2 mm²/s bis 10000 mm²/s und besonders bevorzugt 5 mm²/s bis 1000 mm²/s.

Im speziellen bevorzugt werden OH-terminierte Polydimethylsiloxane eingesetzt die bevorzugte eine kinematische Viskosität gemessen bei 25 °C 5 mm²/s bis 100 mm²/s aufweisen.
Vorzugsweise werden auch vernetzte oder teilvernetzte Organopolysiloxane, so genannte Siliconharze, eingesetzt, wobei es sich bevorzugt um solche handelt, die Bausteine der allgemeinen Formel III-a und Bausteine der allgemeinen Formel III-e enthalten, besonders bevorzugt mit R⁴ gleich Methyl, a gleich 3 und b gleich 0, oder solche, die vorzugsweise Bausteine der allgemeinen Formel III-c und Bausteine der allgemeinen Formel III-b enthalten, besonders bevorzugt mit R⁴ gleich Methyl.

### Menge Hydrophobierungsmittel

Die Zusatzmengen an Hydrophobierungsmittel in Schritt i hängt von der spezifischen Oberfläche (BET-Oberfläche) der Kieselsäuren, deren Anteil an der Mischung, der Art der Silane bzw. Siloxane sowie der für die Endanwendung notwendigen Hydrophobie ab. Die Zugabemenge liegt vorzugsweise zwischen 0,5 und 20 Gew.- %, bevorzugt zwischen 1 und 15 Gew.- %, besonders bevorzugt zwischen 5 und 10 Gew.-%, jeweils bezogen auf die gesamte Mischung.

### Herstellung der Mischung

In einer bevorzugten Ausführungsform werden die Komponenten gemischt. Die Zugabe des Hydrophobierungsmittels erfolgt während der Mischungsherstellung vorzugsweise in flüssiger Form, dabei ist es notwendig, dass eine innige Durchmischung der einzelnen Komponenten stattfindet. Die Adsorption des Hydrophobierungsmittels erfolgt bevorzugt durch Besprühen der Kieselsäure mit dem flüssigen Hydrophobierungsmittel im Fließbett oder in der Wirbelschicht.

Die Temperatur ist im Allgemeinen so gewählt, dass das eingesetzte Hydrophobierungsmittel während des Mischvorgangs in Schritt i und vor der Verdichtung noch nicht vollständig mit den Silanolgruppen der Silica Oberfläche reagiert. Durch diese Temperatureinstellung wird erreicht, dass sich die belegte Kieselsäure hinsichtlich der Verarbeitbarkeit im Sinne einer Verdichtung, insbesondere Granulierung, weitgehend wie eine hydrophile Kieselsäure verhält. Für die Herstellung von Granulaten mit einer optimalen Kombination aus Hydrophobie und mechanischer Stabilität ist dies entscheidend. Wird diese Temperatur auch nur für einige Stunden überschritten, so verhält sich die Kieselsäuremischung hinsichtlich der Granulierbarkeit bereits wie eine hydrophobe HDK mit vergleichbarem C-Gehalt (siehe auch Beispiel 3 verglichen mit Vergleichsbeispiel 2 verglichen mit Vergleichsbeispiel 3 und Beispiel 14 Durchgang B verglichen mit Vergleichsbeispiel 9).

Die Zugabegeschwindigkeit und die Nachrührdauer des Hydrophobierungsmittels sind im Allgemeinen so gewählt, dass eine innige Durchmischung sichergestellt ist.

Nach Schritt i und vor dem Entlüften in Schritt ii wird die Mischung nur kurz gelagert. Die Lagerungsdauer der Mischung ist im Allgemeinen so gewählt, dass das eingesetzte Hydrophobierungsmittel während des Mischvorgangs, vor der Entlüftung und vor der Verdichtung noch nicht vollständig mit den Silanolgruppen der Silica Oberfläche reagiert (siehe auch Beispiel 3 verglichen mit Vergleichsbeispiel 4 und Beispiel 14 Durchgang B verglichen mit Vergleichsbeispiel 8). Vorzugsweise beträgt die Lagerungsdauer bis zur Entlüftung höchstens 24 Stunden, im speziellen bevorzugt wird das Material sofort entlüftet. Vorzugsweise wird nach der Entlüftung sofort verdichtet und granuliert.

### Entlüftung

Da Kieselsäuren, insbesondere pyrogene Kieselsäuren bzw. Kieselsäure enthaltende Mischungen üblicherweise sehr niedrige Schüttdichten aufweisen, besteht die Herausforderung bei der Herstellung von Granulaten darin, die Luft zu entfernen. Eine Entlüftung der Mischung aus Schritt i bewirkt, dass sich die erhaltenen Formkörper nach dem Pressvorgang, nicht wieder aufblähen und zerfallen.

Eine ausreichende Entlüftung kann beispielsweise durch sehr langsames Verdichten erreicht werden (siehe Beispiele 3-9). Für eine großtechnische, insbesondere kontinuierliche Produktion sind solch langsame Verdichtungsschritte nicht wirtschaftlich anwendbar. Es ist daher vorteilhaft die Kieselsäure aktiv zu entlüften. Dies kann beispielsweise durch den Einsatz von vermindertem Druck gelingen. Dabei kann während der Entlüftung bereits eine Volumenabnahme der Mischung stattfinden. Die Entlüftung und anschließende Verdichtung und Granulierung kann entweder in unterschiedlichen Geräten oder auch in einem Gerät, das beide Funktionen erfüllt, durchgeführt werden.

### Verdichtung

Nach dem Herstellen der Mischung in Schritt i und Entlüften in Schritt ii wird diese durch Kompaktieren oder Pressen in Schritt iii auf die gewünschte Dichte gebracht. Dies ist notwendig, um die Porengröße hinsichtlich optimaler Isolierwirkung einzustellen und um mechanisch stabile Granulate erhalten zu können. Im Allgemeinen führt eine höhere Verdichtung zu härteren, stabileren Partikeln. Dies kann durch alle dem Fachmann bekannten Methoden erfolgen.
Um zusätzliche Prozessschritte vermeiden zu können, erfolgt während der Verdichtung vorzugsweise gleichzeitig eine Formgebung. In Abhängigkeit des Pressverfahrens können verschiedenste Formen, Größen und Größenverteilungen eingestellt werden. Für Anwendungen in der Bauisolierung werden häufig rieselfähige Pulver bzw. Granulate eingesetzt.
Unter Granulaten werden im Allgemeinen alle Formen verstanden, die mittels, dem Fachmann bekannten, Geräten zur Verdichtung von Pulvern herstellbar sind. Bevorzugt werden unter Granulaten Formen verstanden, die durch die Verdichtung mittels Walzen (glatt oder perforiert) herstellbar sind (z.B. Stülpen, Schülpen, Plättchen, Stäbchen, Briketts, Tabletten, Pellets, Kugeln, Linsen, Bruchstücke, Splitter). Vorzugsweise beträgt die durchschnittliche Größe der Granulatpartikel wenigstens in einer Dimension, bevorzugt in zwei Dimensionen, besonders bevorzugt in allen drei Dimensionen höchstens 100 mm, besonders bevorzugt höchstens 50 mm, insbesondere bevorzugt höchstens 10 mm.
Bevorzugt liegt die mittlere Partikelgröße (D50 Wert) der Granulate im Bereich von 0,5 mm bis 10 mm, besonders bevorzugt im Bereich von 0,8 mm und 6,0 mm, insbesondere bevorzugt im Bereich von 1,0 mm und 4,0 mm.

Um Granulate mit guten Dämmeigenschaften und Stabilitäten erhalten zu können werden die Granulate bevorzugt auf Zielschüttdichten von 120 g/L bis 350 g/L, besonders bevorzugt auf 120 g/L bis 250 g/L und insbesondere bevorzugt auf 150 g/L bis 200 g/L verdichtet. Die dadurch erzielte Wärmeleitfähigkeit der Granulate in Form einer losen Schüttung beträgt vorzugsweise höchstens 35 mW/ (m*K), bevorzugt höchstens 30 mW/ (m*K), besonders bevorzugt höchsten 28 mW/ (m*K) und insbesondere bevorzugt höchstens -26 mW/ (m*K).
Die Mischung wird zunächst entlüftet, wobei bereits ein erster Verdichtungsschritt des Materials stattfindet. Die Schüttdichte nach dem ersten Verdichtungs- und Entlüftungsschritt liegt vorzugsweise über 70 g/L, bevorzugt über 90 g/L, besonders bevorzugt über 120 g/L. Nach der Entlüftung wird die Mischung in einem zweiten Verdichtungsschritt auf die Zielschüttdichte gebracht. Dies wird vorzugsweise durch Walzen durchgeführt. Vorzugsweise erfolgt gleichzeitig eine Formgebung.
Hierfür kann dem Fachmann bekanntes Equipment eingesetzt werden. Die Kompaktierung erfolgt bevorzugt als Trockenkompaktierung derart, dass die erfindungsgemäße Mischung in einer Kompaktierungseinheit zwischen zwei rotierenden Walzen verpresst wird, wobei besonders bevorzugt zumindest eine, insbesondere bevorzugt beide Walzen Vertiefungen, wie Riffeln, Mulden oder Kissen, aufweist. Die Walzen können gerade oder konkav ausgeführt sein. Weiterhin kann es vorteilhaft sein, wenn zumindest eine Walze derart ausgestaltet ist, dass an der Walzenoberfläche ein Unterdruck erzeugt werden kann (Filterwalze), durch den die zu kompaktierende Mischung an die Walze angesaugt und dadurch entlüftet wird. Bevorzugt findet nach dem Ansaugen und Entlüften die Verdichtung auf die Zieldichte durch eine geeignete Gegenwalze (Presswalze) statt. Hierfür können alle dem Fachmann bekannte Geräte, z.B. die Vacupress der Firma Grenzebach BSH, eingesetzt werden. Die Entlüftung und Verdichtung findet dabei nacheinander in einem Gerät statt (siehe Beispiel 12). Die Zufuhr der Kieselsäure zu der Kompaktierungseinheit kann mittels aller dem Fachmann bekannten Fördermittel, wie beispielsweise Förderschnecken oder Doppelschnecken erfolgen. In einer besonders bevorzugten Ausführungsform werden für die Dosierung und Förderung Trichter und Förderschnecken benutzt, die zumindest teilweise Oberflächen (z.B. die Schnecke selbst, die Wand, oder spezielle Einbauten) besitzen, an welchen ein Unterdruck erzeugt werden kann und so die Entlüftung stattfindet.
Die Granulierung der Kieselsäure wird vorzugsweise in einem Trockenkompaktor mit nachgeschaltetem Siebgranulator und Sieb durchgeführt. Die vorgelegte Mischung kann, z. B. in einem Apparat der Firma Hosokawa Bepex GmbH, kompaktiert und das kompaktierte Material auf die gewünschte Kornfraktion siebgranuliert und fraktioniert werden.
Nach der Kompaktierung können die erhaltenen Stülpen und Granulate, welche die für die Anwendung erforderliche Größe überschreiten, abgetrennt und/oder zerkleinert werden. Dies kann nach allen dem Fachmann bekannten Methoden durchgeführt werden, wie beispielsweise durch Brechen, Klassieren oder Mahlen. Anschließend erfolgt eine Trennung der erhaltenen Bruchstücke in verschiedene Kornfraktionen. Hierfür kann beispielsweise eine Siebmühle der Firma Hosokawa Bepex GmbH eingesetzt werden.
Ebenso können Partikel abgetrennt werden, welche die erforderliche Größe unterschreiten. Zum Einsatz können dabei alle dem Fachmann bekannten Methoden zur Siebung oder Sichtung von Schüttgütern kommen. Bevorzugt erfolgt die Trennung der verschiedenen Korngrößenfraktionen durch Siebung. Zu kleine Partikel können, z.B. aufgrund von erhöhter Staubbildung, für die Endanwendung nachteilig sein.

Im Gegensatz zu anderen Verfahren, bei denen während oder nach der Kompaktierung eine Temperung erfolgt, kann der Feinanteil, nach der Abtrennung nach Schritt iv in die vorangehenden Prozessschritte, insbesondere in die entlüftete Mischung aus Schritt ii gegeben und in die Verdichtung von Schritt iii zurückgeführt werden. Dabei wird der Feinanteil mit frischem Material, also nicht auf die Zieldichte verdichtetem Material, vermischt und so erneut in die Granulierung rückgeführt (Beispiele 10 und 13 F). Für eine großtechnische Umsetzung ist diese geschlossene Fahrweise besonders vorteilhaft, da somit keine unerwünschten Nebenprodukte bzw. Korngrößenfraktionen anfallen.
Vorzugsweise wird die Bildung von Feinanteil minimiert, um in großtechnischen Prozessen möglichst hohe Durchsätze erreichen zu können. Die Partikelgröße und die Bildung von Feinanteil können beispielsweise durch die Wahl der Presswerkzeuge (z.B. Walzenform) und die Presskraft beeinflusst werden. Die Bildung von Partikeln kleiner 1 mm konnte dadurch beispielsweise von 22 % auf 16 % bzw. 2 % verringert werden(siehe Beispiele 13 B, 13 D, 14 A, 14 B) .

Nach der Granulierung kann das Hydrophobierungsmittel mit den Silanolgruppen der Kieselsäure reagieren, wodurch die Hydrophobie der Granulate vorzugsweise zunimmt. In einer bevorzugten Ausführungsform erfolgt dies ohne Temperierung, z.B. durch Lagerung bei Raumtemperatur. Die Lagerungsdauer der Granulate beträgt bei Raumtemperatur vorzugsweise mindestens 3 Tage, bevorzugt mindestens eine Woche, besonders bevorzugt mindestens zwei Wochen. Diese finale Hydrophobierung kann auch durch eine Temperaturerhöhung beschleunigt werden. In einer bevorzugten Ausführungsform erfolgt die Temperung der Granulate bei einer Temperatur von vorzugsweise bei 60 bis 300 °C und bevorzugt bei 70 bis 130 °C. Die Hydrophobierung im Anschluss an die Granulation kann auch durch Zugabe von katalytisch aktiven Substanzen beschleunigt werden. Hierzu können alle dem Fachmann bekannten Verbindungen zur Aktivierung funktioneller Organosiliciumverbindungen, wie beispielsweise Bröndsted- oder Lewis-Säuren, eingesetzt werden. Beispiele für Bröndsted-Säuren sind Salzsäure, Schwefelsäure oder Salpetersäure, bevorzugt wird als Bröndsted-Säure Salzsäure eingesetzt. Einsetzbare Lewis-Säuren sind beispielsweise Zinn- oder Titanverbindungen wie Zinnalkoxide oder Titanalkoxide.

### Verwendung

Die Silica Formkörper finden bevorzugt Verwendung in der dem Fachmann bekannten Anwendungsform zur thermischen oder akustischen Isolierung. Beispielsweise finden die Silica Formkörper Anwendung als Komponenten in anorganischen Putzsystemen, gegebenenfalls in Kombination mit weiteren organischen oder anorganischen Bindersystemen, nach weiterer Verarbeitung in Form von Platten, welche direkt als Dämmstoff eingesetzt werden können, oder beispielsweise als Einblasdämmstoff zur Füllung von Hohlräumen in Mauerwerken, oder zur Füllung von Hohlbausteinen.

### Beispiele

In den folgenden Beispielen sind, falls jeweils nicht anders angegeben, alle Mengen- und Prozentangaben auf das Gewicht bezogen, alle Drücke 0,10 MPa (abs.) und alle Temperaturen 20°C.

### Bestimmung der Schüttdichte

Die Schüttdichte der Granulate wird in Anlehnung an DIN ISO 697 bestimmt. Hierfür wird das zu untersuchende Material in ein Gefäß mit bekanntem Volumen (1 L) geschüttet. Überstehendes Material wird mit einer Leiste abgestrichen. Durch Wiegen wird das Gewicht der Schüttung ermittelt und daraus die Schüttdichte berechnet.

### Bestimmung der thermischen Leitfähigkeit

Die Bestimmung der Wärmeleitfähigkeit der Granulate erfolgt bei Raumtemperatur in Form einer losen Schüttung mit einem THB Transient Hot Bridge Analyzer (THB-100) der Firma Linseis unter Verwendung eines HTP Sensors (Messzeit 120 Sekunden, Messstrom: 17,50 mA, Strom für Temperaturmessung 5,00 mA). Die Kalibrierung des Sensors erfolgte an einer Referenz mit der thermischen Leitfähigkeit von 25,0 mW/ ( K*m). Für die Messung wird der Sensor in eine lose Schüttung des zu untersuchenden Materials eingebracht. Dabei wird darauf geachtet, dass der Sensor von beiden Seiten mit dem Material bedeckt ist.

### Qualitativer Test auf Hydrophobie

Die Beurteilung der Hydrophobie wird eine Woche nach der Granulierung durchgeführt. Hierfür wird 1 g des hydrophoben Silica Granulats zu 100 ml Wasser gegeben und in einem geschlossenen Gefäß geschüttelt und anschließend für 24 h bei 60 °C gelagert. Die Beurteilung erfolgt wie folgt:
+ Hydrophob: Granulate sind kaum von Wasser benetzbar und schwimmen komplett an der Wasseroberfläche.
o Teilhydrophob: Granulate sind benetzbar, schwimmen aber größtenteils an der Wasseroberfläche.
- Nicht hydrophob: Granulate sind sofort benetzbar und sinken innerhalb weniger Minuten im Wasser nach unten.

### Beurteilung der mechanischen Stabilität

Zur qualitativen Beurteilung der mechanischen Stabilität der erhaltenen Granulate werden zunächst Partikel kleiner 1 mm mittels Handsiebung abgetrennt. 10 g der gesiebten Granulate werden in eine 1 L Schraubflasche gefüllt, für eine Minute geschüttelt und somit mechanisch beansprucht. Zudem beurteilt, ob die bei der Entnahme aus der Presse bzw. nach dem Durchgang durch die Walze, sowie bei der Siebung in Form bleiben, oder wieder zu feinem Pulver bzw. Partikeln zerfallen. Folgende Beurteilungen werden dabei verwendet:
+ stabil, wenig Abrieb, kaum Feinanteilbildung beim Schütteln, nach der Granulierung und der Siebung
o mäßig stabil, Abrieb und Bruch zu beobachten
- wenig stabil, Abrieb und Bruch durch geringe Beanspruchung zu beobachten, signifikante Mengen an Feinanteil gebildet

### Bestimmung des Kohlenstoffgehalts

Die Bestimmung des Kohlenstoffgehalts (C-Gehalts) der Proben wird an einem Leco CS 230 Analysator durchgeführt. Die Analyse erfolgt durch Hochfrequenzverbrennung der Probe im Sauerstoffstrom. Detektiert wird mittels nicht dispersiver Infrarotdetektoren.

### Partikelgrößenanalyse

Die Partikelgrößenanalyse wird in Anlehnung an DIN 66165 durchgeführt. Der mittlere Partikeldurchmesser (D50 Wert) wird aus Verteilungssummenkurve abgelesen. Die Siebung erfolgt per Handsiebung.
Der Anteil an Partikeln größer 1 mm wird ebenfalls mittels Siebung bestimmt. Hierfür wird eine abgewogene Menge an Granulat mit einem 1,0 mm Sieb gesiebt (Handsiebung). Der Anteil an Partikeln größer und kleiner 1 mm wird durch Wiegen der Fraktionen ermittelt.

### Bezugsquellen:

**HDKⓇ T30:** hydrophile, pyrogene Kieselsäure der Wacker Chemie AG mit einer BET Oberfläche von 300 m² / g.
**HDKⓇ N20:** hydrophile, pyrogene Kieselsäure der Wacker Chemie AG mit einer BET Oberfläche von 200 m² / g.
**HDKⓇ T30P:** hydrophile, pyrogene Kieselsäure der Wacker Chemie AG mit einer BET Oberfläche von 300 m² / g und einer Dichte von ca. 100 g/L.
**HDKⓇ H18:** hydrophobe, pyrogene Kieselsäure der Wacker Chemie AG mit einer BET Oberfläche von 170-230 m² / g, einer Dichte von ca. 50 g/L und einem C-Gehalt von 4 - 5,2 %.
**OH-terminierte PDMS:** OH-terminiertes Polydimethylsiloxan der Wacker Chemie AG mit einer kinematischen Viskosität im Bereich von 30 - 35 mm²/s.

Alle weiteren Laborchemikalien wurden von gängigen Zulieferern bezogen.

### Laborversuche

### Beschreibung der Belegung:

### Belegung Methode A

Die Mischung, bestehend aus Kieselsäure und Additiven, wird bei 25 °C für 10 Minuten intensiv gerührt, so dass das Material fluidisiert wird. Über eine Zweistoffdüse wird das Organosiloxan verdüst und auf die fluidisierte Kieselsäure gesprüht. Man erhält nach der Belegung ein rieselfähiges Pulver, das bei Raumtemperatur maximal 3 Tage gelagert wird.

### Belegung Methode B

10 % der einzusetzenden Mischung, bestehend aus Kieselsäure und Additiven, wird bei 25 °C für 10 Minuten intensiv gerührt, so dass das Material fluidisiert wird. Anschließend wird das Organosiloxan unter Rühren in die Mischung getropft. Bei der Wahl des Rührers und der Rührdauer wird darauf geachtet, dass möglichst wenig Organosiloxan an den Gefäßwänden verbleibt. Dies kann beispielsweise durch Anfärben des Organosiloxans und durch wiegen der resultierenden Mischung überprüft und gegebenenfalls optimiert werden.
Man erhält nach der Belegung ein rieselfähiges Pulver (Masterbatch).
In einem größeren Rührwerk wird bei Raumtemperatur die restliche Menge der Mischung, bestehend aus Kieselsäure und Additiven, durch intensiv gerührt. In diese Mischung wird unter Rühren das Masterbach gestreut. Man erhält nach der Belegung ein rieselfähiges Pulver, das bei Raumtemperatur maximal 3 Tage gelagert wird.

### Zusammensetzungen:

**Mischung A**

| | |
|---|---|
| HDK T30: | 1,0 kg |
| OH-terminiertes Polydimethylsiloxan (Viskosität 35 mm² / s) : | 0,15 kg |
| C-Gehalt der Mischung: | 4,2 % |
| Schüttdichte: | 60 g/L |

**Mischung B**

| | |
|---|---|
| HDK T30: | 1,0 kg |
| OH-terminiertes Polydimethylsiloxan (Viskosität 35 mm² / s) : | 0,1 kg |
| C-Gehalt der Mischung: | 3,0 % |
| Schüttdichte: | 60 g/L |

**Mischung C**

| | |
|---|---|
| HDK T30: | 1,0 kg |
| OH-terminiertes Polydimethylsiloxan (Viskosität 35 mm² / s) : | 0,075 kg |
| C-Gehalt der Mischung: | 2,2 % |
| Schüttdichte: | 50 g/L |

**Mischung D**

| | |
|---|---|
| HDK T30: | 1,0 kg |
| Siliciumcarbid Pulver: | 0,05 kg |
| OH-terminiertes Polydimethylsiloxan (Viskosität 35 mm² / s) : | 0,1 kg |
| Schüttdichte: | 65 g/L |

**Mischung E**

| | |
|---|---|
| HDK T30: | 0,8 kg |
| PERKASIL® GT3000: | 0,2 kg |
| OH-terminiertes Polydimethylsiloxan (Viskosität höhere 35 mm² / s) : | 0,1 kg |
| Schüttdichte: | 90 g/L |

**Mischung F**

| | |
|---|---|
| HDK N20: | 1,0 kg |
| OH-terminiertes Polydimethylsiloxan (Viskosität höhere 35 mm² / s) : | 0,1 kg |
| Schüttdichte: | 60 g/L |

### Beschreibung der Granulierung im Labor (Methode A)

Die in der Belegung hergestellte Mischung wird am Tag der Belegung bei Raumtemperatur in einen Hohlzylinder mit einem Filterfließ am Boden eingefüllt. An dem Filterfließ wird ein Unterdruck angelegt, wodurch die Schüttung entlüftet wird. Dabei verringert sich das Schüttvolumen um etwa 30 bis 50 %. Die vorverdichtete Mischung wird in eine Pressform gefüllt. Die Bodenplatte und der Stempel sind perforiert, also mit Einbuchtungen versehen (Wellenprofil). Mit einer Presse wird der Stempel in die Pressform gefahren, um die Mischung auf die Zieldichte zu bringen. Die Zieldichte wird über die eingefüllte Menge der Mischung gesteuert. Die Beurteilung der Hydrophobie erfolgt eine Woche nach der Granulierung. Ggfs. entstandene Stülpen größer 10 mm werden über ein Sieb abgetrennt und zerkleinert, bis sie das 10 mm Sieb passieren.

### Beschreibung der Granulierung im Labor (Methode B)

Die in der Belegung hergestellte Mischung wird am Tag der Belegung bei Raumtemperatur
in eine Pressform gefüllt. Die Bodenplatte und der Stempel sind perforiert, also mit Einbuchtungen versehen (Wellenprofil). Mit einer Presse wird der Stempel in die Pressform gefahren, um die Mischung auf die Zieldichte zu bringen. Die Zieldichte wird über die eingefüllte Menge der Mischung gesteuert. Der Vorschub des Stempels muss dabei so gewählt werden, dass die Luft langsam über den Rand des Stempels austreten kann (Entlüftung), ohne dass große Mengen der feinen Kieselsäure entweichen. Für eine gründliche Entlüftung wird der Vorschub des Stempels bei etwa 80-90% der gewünschten Zieldichte für etwa 10 Minuten unterbrochen (Entlüftung über den Spalt zwischen Stempel und Presssform). Anschließend wird auf die Zieldichte verdichtet und vor dem Entformen erneut etwa 10 Minuten gewartet. Die Beurteilung der Hydrophobie erfolgt eine Woche nach der Granulierung. Gegebenenfalls entstandene Stülpen größer 10 mm werden über ein Sieb abgetrennt und zerkleinert, bis sie das 10 mm Sieb passieren.
**Beispiel 1-9:** Die in der Tabelle genannte Mischung wird entsprechend der genannten Methode zur Belegung und der genannten Methode zur Granulierung umgesetzt und anschließend charakterisiert und beurteilt.
**Beispiel 10:** Ein Granulat entsprechend Beispiel 4 wird auf eine Größe kleiner 1 mm zerkleinert. Dieses Granulat (30 %) wird mit frischem Material der Mischung B (70 %) in einem Rührer intensiv gemischt und entsprechend Beispiel 4 verdichtet.

**Vergleichsbeispiel 1** (nicht erfindungsgemäß): HDK T30 wird ohne weitere Vorbehandlung entsprechend Methode A granuliert.
**Vergleichsbeispiel 2** (nicht erfindungsgemäß): Mischung A, hergestellt nach Methode A, wird nach der Herstellung für 6 Stunden bei 60 °C gelagert und anschließend entsprechend Methode B verdichtet. Die Granulate zerfallen beim Entformen weitgehend zu feinem Pulver.
**Vergleichsbeispiel 3** (nicht erfindungsgemäß): HDK H18 wird ohne weitere Vorbehandlung entsprechend Methode B granuliert. Die Granulate zerfallen beim Entformen weitgehend zu feinem Pulver.
**Vergleichsbeispiel 4** (nicht erfindungsgemäß)
Mischung A, hergestellt nach Methode A, wird nach der Herstellung für 3 Monate bei Raumtemperatur gelagert und anschließend entsprechend Methode B verdichtet. Die Granulate zerfallen beim Entformen teilweise zu kleineren Bruchstücken.
**Vergleichsbeispiel 5** (nicht erfindungsgemäß)
Mischung B, hergestellt nach Methode A, wird nach Methode B granuliert, wobei nur eine geringe Verdichtung gewählt wird (< 100 g/L). Die Granulate zerfallen beim Entformen weitgehend zu feinem Pulver
In Tabelle 1 sind die analytischen Daten der Laborversuche zusammengestellt:

**Tabelle 1**

| Beispiel | Zusammensetzung | Belegung Methode | Granulierung Methode | Schüttdichte [g/L] | λ-Wert [mW/K*m] | Hydrophobie | Stabilität |
|---|---|---|---|---|---|---|---|
| 1 | A | A | A | 145 | 26 | + | + |
| 2 | A | B | A | 152 | 26 | + | + |
| 3 | A | A | B | 139 | 25 | + | + |
| 4 | B | A | B | 151 | 26 | + | + |
| 5 | B | A | B | 122 | 25 | + | ○ |
| 6 | C | A | B | 145 | 26 | ○ | + |
| 7 | D | A | B | 150 | 26 | + | + |
| 8 | E | A | B | 144 | 29 | + | ○ |
| 9 | F | A | B | 162 | 27 | + | + |
| 10 | X | X | X | 154 | 27 | + | + |
| Vgl. 1* | X | X | A | 160 | 28 | - | + |
| Vgl. 2* | X | X | B | 141 | 26 | + | - |
| Vgl. 3* | X | X | B | 136 | 25 | + | - |
| Vgl. 4* | X | X | B | 140 | 26 | + | ○ |
| Vgl. 5* | B | A | B | 97 | 27 | + | - |

| | | | | | | | |
|---|---|---|---|---|---|---|---|
| X: siehe Beschreibung der einzelnen Beispiele bzw. Vergleichsbeispiele * nicht erfindungsgemäß | | | | | | | |

### Betriebsversuche

### Kontinuierliche Belegung der Kieselsäure (Beispiel 11)

In einem Reaktor mit mehrstufigen Rührern wird kontinuierlich HDK T30 über eine Schnecke zudosiert. In dem Reaktor wird die Kieselsäure intensiv durchmischt (fluidisiert) und über Zweistoffdüsen mit einem OH-terminierten Polydimethylsiloxan (Viskosität 35 mm² / s) besprüht. Über den Boden wird die belegte Kieselsäure kontinuierlich abgezogen. Die Verweilzeit beträgt etwa 30 Minuten. Die Dosierung des Hydrophobierungsmittels ist so eingestellt, dass der Gehalt an OH-terminiertem Polydimethylsiloxan etwa 15 Gew.-% beträgt. Man erhält ein rieselfähiges Pulver mit einer Schüttdichte im Bereich von 40 - 70 g/L und einem C-Gehalt von etwa 4,5 %.

### Kontinuierliche Verdichtung mit Presswalze (Beispiel 12)

Die im Betriebsversuch hergestellte Mischung (Beispiel 11) wird unmittelbar nach der Produktion auf einer Vakuumpresswalze (VACUPRESS der Firma Grenzebach) verdichtet. Die Vakuumpresswalze besteht aus einer sogenannten Filterwalze, an der zur Entlüftung des Materials ein Unterdruckangelegt werden kann, und einer Gegenwalze, die das entlüftete Material auf die Zieldichte komprimiert. Die belegte Kieselsäure wird dabei bei Raumtemperatur an die rotierende Filterwalze angesaugt, entlüftet und in weitern Durchlauf durch das Gerät über eine Gegenwalze auf die Zieldichte verdichtet. Durch den Anpressdruck und die Rotationsgeschwindigkeit der Walzen lässt sich die Verdichtung einstellen. Eine Erhöhung des Anpressdrucks und eine Erniedrigung der Rotationsgeschwindigkeit (längere Kontaktzeit mit der Filterwalze und damit bessere Entlüftung) führen zu einer Erhöhung der Schüttdichte.

In Tabelle 2 sind die analytischen Daten von Beispiel 12 zusammengestellt:

| Durch -gang | Walzen drehzahl [U/min ] | Schütt - dichte [g/L] | Anteil > 1,0 mm [%] | D50 [mm] | λ-Wert [mW/K* m] | Hydrophobie | Stabilität |
|---|---|---|---|---|---|---|---|
| A* | 3,0 | 100 | 40 | 0,8 | 26 | + | - |
| B | 2,0 | 120 | 50 | 1,0 | 25 | + | ○ |
| C | 1,1 | 150 | 80 | 2,0 | 25 | + | + |

| | | | | | | | |
|---|---|---|---|---|---|---|---|
| * nicht erfindungsgemäß | | | | | | | |

### Kontinuierliche Verdichtung mit einem Granulator (Beispiel 13)

Das zu granulierende Material wird mit einem Kompaktor der Firma HOSOKAWA weiter verdichtet (Alpine Kompaktor ARC L 200/50). Dabei wird das Material über einen Trichter und eine Schnecke auf die eigentliche Granuliereinheit geleitet (zwei gegenläufige Walzen mit Wellenprofil 6,0 mm). Am Schneckengang wird dabei ein Unterdruck angelegt (0,2 bar), um das zu verdichtende Material zusätzlich entlüften zu können. Über den Anpressdruck (regelbar über die Drehzahl der Schnecke und der Walze) lässt sich die Verdichtung steuern. Die jeweiligen Pressdrücke sind der Tabelle 3 zu entnehmen. Anschließend werden die Stülpen mit einem Alpine Flake Crusher AFC 200 schonend auf eine Größe kleiner 4 mm zerkleinert. Mittels Siebung (Maschenweite 1,0 mm) wird der Anteil an Partikeln größer 1 mm ermittelt. Für die Bestimmung der Schüttdichte und der Wärmeleitfähigkeit wird die Fraktion größer 1,0 mm genutzt.
Durchgang A - E: Das mit der Presswalze vorverdichtete Material aus dem Beispiel 12 (Schüttdichte ~ 100 g/L) wird entsprechend der Versuchsvorschrift granuliert.
Durchgang F: Der Feinanteil aus Durchgang B (Beispiel 13) wird mit frischem Material (Material aus Durchgang A des Beispiels 12) gemischt, so dass der Anteil an frischem Material 80 % beträgt. Das Material wird einsprechend der Versuchsvorschrift umgesetzt.
Durchgang G: Das nicht vorverdichtete Material aus Beispiel 11 wird entsprechend der Versuchsvorschrift entlüftet und verdichtet. Das Material wird dabei über einen Trichter dem Schneckengang zugeführt. In dem Schneckengang wird das Material mittels Unterdruck entlüftet. Der Durchsatz wird im Vergleich zu den Durchgängen A-F (Einsatz entlüfteter Materialien) verringert, so dass während dem Transport im Schneckengang eine Entlüftung erreicht wird. Die weitere Verdichtung und Granulierung erfolgt wiederum zwischen den Walzen.
Durchgang H: Das Material aus Durchgang G wird erneut entsprechend der Versuchsvorschrift verdichet.
Durchgang I (Vergleichsbeispiel 6): Eine hydrophile Kieselsäure mit einer Schüttdichte von 100-120 g/L (HDK T30P der Wacker Chemie AG) wird entsprechend der Versuchsvorschrift verdichtet.
Durchgang J (Vergleichsbeispiel 7): Eine hydrophobe Kieselsäure mit einer Schüttdichte von 50 g/L (HDK H18 der Wacker Chemie AG) wird entsprechend Durchgang G verdichet. Ein signifikanter Anteil wird nicht granuliert, sondern fällt als Feinanteil an. Die erhaltenen Stülpen zerfallen im Zerkleinerungsschritt fast vollständig und lassen sich nicht zerstörungsfrei Sieben. Auf eine weitere Analyse wird daher verzichtet. Die Schüttdichte wird im Gegensatz zu den vorangehenden Durchgängen nicht mit der Fraktion größer 1,0 mm, sondern mit dem Produkt vor der Siebung durchgeführt.
In Tabelle 3 sind die analytischen Daten von Beispiel 13 zusammengestellt:

| Durch -gang | Pressdruck [N/mm²] | Schüttdichte [g/L] | Anteil > 1,0 mm [%] | λ-Wert [mW/K*m ] | Hydrophobie | Stabili tät |
|---|---|---|---|---|---|---|
| A | 0,60 | 128 | 70 | 25 | + | ○ |
| B | 0,65 | 145 | 78 | 25 | + | + |
| C | 0,80 | 174 | 81 | 26 | + | + |
| D | 1,0 | 194 | 78 | 28 | + | + |
| E | 2,0 | 228 | 79 | 30 | + | + |
| F | 0,80 | 180 | 80 | 26 | + | + |
| G | 0,55 | 134 | 71 | 25 | + | ○ |
| H | 0,75 | 169 | 79 | 25 | + | + |
| I* | 0,70 | 149 | 81 | 28 | - | + |
| J* | 0,55 | 109 | x | x | + | - |

| | | | | | | |
|---|---|---|---|---|---|---|
| * nicht erfindungsgemäß | | | | | | |

### Kontinuierliche Granulierung mit einem Granulator (Beispiel 14)

Das zu granulierende Material wird mit einem Kompaktor der Firma HOSOKAWA (Alpine Kompaktor ARC L 200/50) entsprechend Beispiel 13 granuliert. Statt dem Wellenprofil werden die Walzen mit einem sogenanntes Linsenprofil (6,0 mm) ausgestattet. Auf den Zerkleinerungsschritt mit dem AFC 200 wird verzichtet.
Mittels Siebung (Maschenweite 1,0 mm) wird der Anteil an Partikeln größer 1 mm ermittelt. Die Bestimmung der Schüttdichte und der Wärmeleitfähigkeit wird mit dem nicht gesiebten Produkt durchgeführt.
Durchgang A, B: Das vorverdichtete Material aus Beispiels 12 (Durchgang A, Schüttdichte ~100 g/L) wird entsprechend der Versuchsvorschrift granuliert.
Durchgang C (Vergleichsbeispiel 8) nicht erfindungsgemäß: Das Material aus Beispiel 12 Durchgang A (vorverdichtet auf ca. 100 g/L) wird nach der Herstellung für 3 Monate bei Raumtemperatur gelagert. Anschließend wird das Material entsprechend den Einstellungen von Durchgang B granuliert. Die erhaltenen Granulate zeigen nur geringe mechanische Stabilität und zerfallen während der Siebung teilweise.
Durchgang D (Vergleichsbeispiel 9) nicht erfindungsgemäß: Das Material aus Beispiel 12 Durchgang A (vorverdichtet auf ca. 100 g/L) wird vor der Granulierung für 6 Stunden bei 60 °C gelagert und anschließend entsprechend den Einstellungen von Durchgang B granuliert. Die erhaltenen Granulate zeigen nur sehr geringe mechanische Stabilität. Eine zerstörungsfreie Siebung ist nicht möglich, so dass auf die Durchführung einer Siebanalyse verzichtet wird.

In Tabelle 4 sind die analytischen Daten von Beispiel 14 zusammengestellt:

| Durch -gang | Pressdruck [N/mm²] | Schüttdichte [g/L] | Anteil > 1,0 mm [%] | D50 [mm] | λ-Wert [mW/K*m] | Hydrophobie | Stabilität |
|---|---|---|---|---|---|---|---|
| A | 0,9 | 150 | 83 | 2,8 | 26 | + | + |
| B | 1,5 | 195 | 98 | 4,1 | 29 | + | + |
| C* | 1,5 | 186 | 65 | 2,5 | 28 | + | - |
| D* | 1,5 | 174 | x | x | 27 | + | - |

| | | | | | | | |
|---|---|---|---|---|---|---|---|
| *nicht erfindungsgemäß | | | | | | | |

### Beispiel 15: In einem Rundkolben werden 15 g

Dimethyldiethoxysilan (WACKER® SILAN M2-DIETHOXY der Wacker Chemie AG), 0,5 g Ti(OiPr)4 und 10 g HDK® T30 zur Bildung eines rieselfähigen Pulvers gemischt. Diese Pulvermischung wird für 20 Minuten mit weiteren 45 g HDK T30 in einem Dissolvermischer (4000 UpM) weiter gemischt. Die Pulvermischung wird anschließend entsprechend Methode A für die Granulierung im Labor umgesetzt. Die erhaltenen Granulate werden vor der weiteren Analyse für 2 Wochen bei 25 °C gelagert (Schüttdichte: 134 g/L; λ-Wert: 24 mW/K*m; Hydrophobie: +; Stabilität: +).

### Beispiel 16: In einem Rundkolben werden 7,5 g

Methyltriethoxysilan (WACKER® SILAN M1-TRIETHOXY der Wacker Chemie AG), 7,5 g Dimethyldiethoxysilan, 0,5 g Ti(OiPr)4 und 10 g HDK® T30 zur Bildung eines rieselfähigen Pulvers gemischt. Diese Pulvermischung wird für 20 Minuten mit weiteren 45 g HDK T30 in einem Dissolvermischer (4000 UpM) weiter gemischt. Die Pulvermischung wird anschließend entsprechend Methode A für die Granulierung im Labor umgesetzt. Die erhaltenen Granulate werden vor der weiteren Analyse für 2 Wochen bei 25 °C gelagert (Schüttdichte: 131 g/L; A-Wert: 24 mW/K*m; Hydrophobie: +; Stabilität: +).

### Beispiel 17: In einem Rundkolben werden 10 g

Aminopolydimethylsiloxan (WACKER® L 655 SILICONE FLUID der Wacker Chemie AG) und 10 g HDK® T30 zur Bildung eines rieselfähigen Pulvers gemischt. Diese Pulvermischung wird für 20 Minuten mit weiteren 80 g HDK® T30 in einem Dissolvermischer (4000 UpM) weiter gemischt. Die Pulvermischung wird anschließend entsprechend Methode A für die Granulierung im Labor umgesetzt. Nach der Herstellung werden die erhaltenen Granulate für 30 Minuten bei 150 °C erhitzt. (Schüttdichte: 145 g/L; A-Wert: 25 mW/K*m; Hydrophobie: +; Stabilität: +).

## Patentansprüche

1. Verfahren zur Herstellung hydrophober Silica Granulate, bei dem
i) eine Mischung enthaltend hydrophile Kieselsäure bei einer Temperatur von höchstens 55°C mit Hydrophobierungsmittel belegt wird,
ii) die Mischung aus Schritt i nach einer Lagerungsdauer von höchstens 24 Stunden entlüftet wird und
iii) die Mischung aus Schritt ii auf eine Zielschüttdichte verdichtet wird,
iv) wobei während der Verdichtung in Schritt iii eine Granulierung stattfindet.

2. Verfahren nach Anspruch 1, bei dem die Hydrophobierungsmittel ausgewählt werden aus bei 25°C flüssigen, reaktiven Organosilanen, Organosiloxanen oder Siliconharzen, welche hydrophobierende Eigenschaften besitzen und zur Reaktion mit den Si-OH Gruppen der Kieselsäureoberfläche befähigt sind.

3. Verfahren nach einem oder mehreren der voranstehenden Ansprüche, bei dem als Hydrophobierungsmittel OH-terminierte Polydimethylsiloxane eingesetzt werden, die eine kinematische Viskosität gemessen bei 25 °C von 5 mm²/s bis 100 mm²/s aufweisen.

4. Verfahren nach einem oder mehreren der voranstehenden Ansprüche, bei dem als hydrophile Kieselsäuren pyrogene Kieselsäuren oder Fällungskieselsäuren oder Gemische davon eingesetzt werden mit einer BET Oberfläche gemäß DIN 66131 zwischen 100 und 500 m²/g.

5. Verfahren nach einem oder mehreren der voranstehenden Ansprüche, bei dem in Schritt i die hydrophile Kieselsäure mit zwischen 0,5 und 20 Gew.- %, jeweils bezogen auf die gesamte Mischung, an Hydrophobierungsmittel belegt wird.

6. Verfahren nach einem oder mehreren der voranstehenden Ansprüche, bei dem die Verdichtung in Schritt iii durch Walzen durchgeführt wird.

7. Verfahren nach einem oder mehreren der voranstehenden Ansprüche, bei dem nach Schritt iv eine Abtrennung des Feinanteils erfolgt und der abgetrennte Feinanteil in einen der vorangehenden Verfahrensschritte zurückgeführt wird.

## Claims

1. Process for producing hydrophobic silica granules, wherein
i) a mixture containing hydrophilic silica is coated with hydrophobicizing agents at a temperature of not more than 55°C,
ii) the mixture from step i is deaerated after a storage time of not more than 24 hours and
iii) the mixture from step ii is densified to a target bulk density,
iv) with granulation taking place during the densification in step iii.

2. Process according to Claim 1, wherein the hydrophobicizing agents are selected from among reactive organosilanes, organosiloxanes or silicone resins which are liquid at 25°C, have hydrophobicizing properties and are capable of reacting with the Si-OH groups of the silica surface.

3. Process according to one or more of the preceding claims, wherein OH-terminated polydimethylsiloxanes which have a kinematic viscosity measured at 25°C of from 5 mm²/s to 100 mm²/s are used as hydrophobicizing agents.

4. Process according to one or more of the preceding claims, wherein pyrogenic silicas or precipitated silicas or mixtures thereof having a BET surface area in accordance with DIN 66131 in the range from 100 to 500 m²/g are used as hydrophilic silicas.

5. Process according to one or more of the preceding claims, wherein the hydrophilic silica is coated with from 0.5 to 20% by weight, in each case based on the total mixture, of hydrophobicizing agents in step i.

6. Process according to one or more of the preceding claims, wherein the densification in step iii is carried out by rolling.

7. Process according to one or more of the preceding claims, wherein a removal of the fines is carried out after step iv and the fines which have been separated off are recirculated to one of the preceding process steps.

## Revendications

1. Procédé pour la préparation de granulés de silice hydrophobe, dans lequel
i) un mélange contenant de la silice hydrophile est garni à une température d'au plus 55 °C avec des agents d'hydrophobisation,
ii) le mélange de l'étape i est ventilé après une durée de stockage d'au plus 24 heures et
iii) le mélange de l'étape ii est densifié à une densité apparente cible,
iv) une granulation ayant lieu pendant la densification dans l'étape iii.

2. Procédé selon la revendication 1, dans lequel les agents d'hydrophobisation sont choisis parmi les organosilanes, les organosiloxanes ou les résines de silicone réactifs/réactives, liquides à 25 °C, qui possèdent des caractéristiques hydrophobisantes et qui sont capables de réagir avec les groupes Si-OH de la surface de la silice.

3. Procédé selon l'une ou plusieurs des revendications précédentes, dans lequel des polydiméthylsiloxanes à terminaison OH sont utilisés en tant qu'agents d'hydrophobisation, qui présentent une viscosité cinématique mesurée à 25 °C de 5 mm²/s à 100 mm²/s.

4. Procédé selon l'une ou plusieurs des revendications précédentes, dans lequel des silices pyrogénées ou des silices précipitées ou des mélanges correspondants, dotés d'une surface BET selon la norme DIN 66131 comprise entre 100 et 500 m²/g, sont utilisés en tant que silices hydrophiles.

5. Procédé selon l'une ou plusieurs des revendications précédentes, dans lequel dans l'étape i, la silice hydrophile est garnie avec entre 0,5 et 20 % en poids, à chaque fois par rapport au mélange total, d'agent d'hydrophobisation.

6. Procédé selon l'une ou plusieurs des revendications précédentes, dans lequel la densification dans l'étape iii est mise en œuvre par roulage.

7. Procédé selon l'une ou plusieurs des revendications précédentes, dans lequel après l'étape iv, une séparation des fines est réalisée et les fines séparées sont recyclées dans l'une des étapes de procédé précédentes.
